# EUROPÄISCHE PATENTSCHRIFT

(11) **EP 4 444 248 B1**
(45) Veröffentlichungstag und Bekanntmachung des Hinweises auf die Patenterteilung: **27.08.2025**
(21) Anmeldenummer: 22808975.1
(22) Anmeldetag: 13.10.2022
(51) Int. Cl.: A61J 3/07

(54) **PHARMAZEUTISCHE PRODUKTIONSANLAGE UMFASSEND EINE MESSEINRICHTUNG**
PHARMACEUTICAL PRODUCTION FACILITY COMPRISING A MEASURING DEVICE
INSTALLATION DE PRODUCTION PHARMACEUTIQUE COMPRENANT UN DISPOSITIF DE MESURE

(30) Priorität: 08.12.2021 DE 102021132328
(43) Veröffentlichungstag der Anmeldung: 16.10.2024
(73) Patentinhaber: Syntegon Technology GmbH, 71332 Waiblingen (DE)
(72) Erfinder: BRINZ, Thomas, 73266 Bissingen an der Teck (DE); STIRM, Philipp, 70734 Fellbach (DE); SCHÜTZ, Stephanie, 74535 Mainhardt (DE)
(74) Vertreter: Novagraaf Group
(86) Internationale Anmeldenummer: PCT/EP2022/078499
(87) Internationale Veröffentlichungsnummer: WO 2023/104375

(56) Entgegenhaltungen:
- US-A- 4 991 377
- US-A1- 2005 217 207
- US-A1- 2012 041 778
- US-A1- 2012 229 147

## Beschreibung

Die Erfindung betrifft eine pharmazeutische Produktionsanlage mit einer Messeinrichtung zum Überwachen einer Versiegelung von Kapseln, wobei die Kapseln eine Kapselhülle aufweisen, welche von einem ersten Hüllenteil und einem zweiten Hüllenteil gebildet ist, wobei die Hüllenteile in einem Versiegelungsbereich mit einer dichtenden Versiegelungsflüssigkeit versehen sind.

Beispielsweise aus der US 2005/0217207 A1 ist eine Kapselbefüllungs- und Versiegelungsvorrichtung bekannt. Diese Vorrichtung weist eine Befüllungseinheit zur Befüllung offener Hüllenteile der Kapseln und eine Versiegelungseinheit zur Versiegelung von zwei miteinander zu verbindenden Hüllenteile der Kapseln auf. Die vorgenannten Einheiten werden von zu befüllenden Kapselteilen bzw. von mit einer Versiegelung zu versehenden Kapseln durchlaufen. Die Versiegelungseinheit weist eine Liniensensor-Kamera auf zur Überprüfung eines Versiegelungszustands der Verbindungsabschnitte der versiegelten Kapseln, verbunden mit dem Zweck, Kapseln mit fehlerhaften Versiegelungen auszusortieren.

Die aus der US 2005/0217207 A1 bekannte Vorrichtung ermöglicht es, mittels einer Liniensensor-Kamera eine zweidimensionale Abbildung einer Kapsel zu erstellen und anhand einer solchen Abbildung einen Versiegelungszustand der Kapsel zu prüfen. Die Liniensensor-Kamera eignet sich für Banderolierungen, welche sich farblich deutlich von benachbarten Kapselabschnitten unterscheiden.

Hiervon ausgehend liegt der vorliegenden Erfindung die Aufgabe zugrunde, eine flexiblere Erfassung eines Versiegelungszustands zu ermöglichen.

Diese Aufgabe wird bei einer pharmazeutischen Produktionsanlage der eingangs genannten Art dadurch gelöst, dass die Messeinrichtung eine Infrarotkamera oder eine Kamera mit Infrarotfilter umfasst, wobei die Messeinrichtung eine Temperatur oder eine Temperaturänderung des Versiegelungsbereichs und/oder von zu dem Versiegelungsbereich benachbarten Kapselabschnitten erfasst.

Eine Infrarotkamera oder eine Kamera mit Infrarotfilter ermöglicht die Erfassung von Infrarotstrahlung und eine bildliche Erfassung einer Temperatur zumindest eines Teilbereichs einer Kapsel.

Erfindungsgemäß wurde erkannt, dass ein Auftrag und eine Trocknung einer Versiegelungsflüssigkeit mit Temperaturänderungen einhergehen, welche für unterschiedliche Versiegelungszustände einer Kapsel charakteristisch sind. Ein Auftrag einer noch fließfähigen und warmen Versiegelungsflüssigkeit geht bspw. zunächst mit einem Wärmeeintrag in den Versiegelungsbereich einher. Ein solcher Wärmeeintrag kann von der Infrarotkamera oder der Kamera mit Infrarotfilter erfasst werden.

Während einer sich anschließenden Trocknung der Versiegelungsflüssigkeit verdunstet das Lösungsmittel der Versiegelungsflüssigkeit, wodurch der Versiegelungsflüssigkeit Wärme entzogen wird. Ein solcher Wärmeaustrag ist durch die Infrarotkamera oder Kamera mit Infrarotfilter erfassbar, bspw. durch Erfassung einer Abkühlung eines Kapselabschnitts und/oder durch Erfassung einer geänderten Umgebungstemperatur der Kapsel.

Die erfindungsgemäße Produktionsanlage ermöglicht eine einfache und zuverlässige Erfassung eines Versiegelungszustands einer Kapsel und eines Trocknungszustands einer Versiegelungsflüssigkeit, ohne dass zu diesem Zweck eine farbliche Unterscheidbarkeit der Versiegelungsflüssigkeit und angrenzender Kapselabschnitte erforderlich ist. Ferner ist es im Wege einer bildlichen Temperaturerfassung möglich, eine Position, Lage und räumliche Ausdehnung einer Versiegelungsflüssigkeit zu bestimmen.

Die Versiegelungsflüssigkeit besteht insbesondere aus demselben Material wie die Kapsel, beispielsweise aus Gelatine. Die Versiegelungsflüssigkeit kann eine Banderolierflüssigkeit sein (in diesem Fall weist die Versiegelung eine Banderolierung auf oder ist durch eine Banderolierung gebildet).

In einer vorteilhaften Ausführungsform umfasst die pharmazeutische Produktionsanlage eine Auswerteeinheit, wobei die Auswerteeinheit ausgebildet ist zur automatischen Auswertung der von der Messeinrichtung erfassten Temperaturen und/oder Temperaturänderungen. Dies ermöglicht eine zumindest weitestgehend automatisierte Prüfung der Kapseln im Hinblick auf einen gewünschten Versiegelungszustand. Beispielsweise können Kapseln mit defekter Versiegelung identifiziert und idealerweise automatisch aussortiert werden.

Ferner vorteilhaft ist es, wenn die pharmazeutische Produktionsanlage eine Versiegelungseinrichtung zur Versiegelung der Kapseln und eine Steuerungseinheit umfasst, welche Verfahrensparameter insbesondere zur Dauer und/oder Menge und/oder Position des Auftrags der Versiegelungsflüssigkeit auf eine Kapsel vorgibt.

In einer vorteilhaften Ausführungsform ist die Versiegelungseinrichtung dazu ausgebildet, eine Versiegelungsflüssigkeit über einen Versiegelungsbereich der Kapselhülle aufzutragen, bspw. in einem Zustand, in welchem das erste Hüllenteil und das zweite Hüllenteil bereits miteinander gefügt sind. Auf diese Weise kann eine dichtende Versiegelung in Form einer Banderolierung hergestellt werden.

In einer zusätzlichen oder alternativen Ausführungsform ist die Versiegelungseinrichtung ausgebildet, eine Versiegelungsflüssigkeit auf einen Versiegelungsbereich einer Innen- oder Außenfläche eines noch nicht mit einem anderen Hüllenteil gefügten Hüllenteils aufzubringen, wobei die Hüllenteile nach Auftrag der Versiegelungsflüssigkeit miteinander gefügt werden.

Die Steuerungseinheit ermöglicht es, den Auftrag einer Versiegelungsflüssigkeit unter Berücksichtigung der Versiegelungsart und der Materialeigenschaften der Kapsel und der Versiegelungsflüssigkeit zu optimieren.

Die pharmazeutische Produktionsanlage umfasst vorzugsweise eine Versiegelungseinrichtung, eine Steuerungseinheit und eine Messeinrichtung. Dies ermöglicht die Herstellung und Prüfung einer Kapselversiegelung unter Verwendung einer kompakten Produktionseinheit.

Vorzugsweise umfasst die pharmazeutische Produktionsanlage eine Fülleinrichtung. Hierdurch können Kapselhüllen mit pulverförmigen oder flüssigen Wirkstoffen befüllt und anschließend in der oder einer Versiegelungseinrichtung versiegelt werden, wobei die Messeinrichtung eine abschließende Prüfung des Versiegelungszustands ermöglicht.

Besonders bevorzugt ist es, dass die Steuerungseinheit mit der Auswerteeinheit kommuniziert. Der Temperaturzustand eines Versiegelungsbereichs einer Kapselhülle wird von der Messeinrichtung erfasst, und es wird ein Infrarotbild erstellt. Dieses Infrarotbild wird von der Auswerteeinheit ausgewertet. Die Auswerteeinheit führt vorzugsweise einen Vergleich von erfassten Ist-Werten mit in der Auswerteeinheit hinterlegten Soll-Werten durch. In Abhängigkeit eines solchen Vergleichs kann die Auswerteeinheit der Steuerungseinheit geänderte Werte für Verfahrensparameter vorgeben.

In einer weiter bevorzugten Ausführungsform ist die Messeinrichtung bezogen auf die Schwerkraftrichtung oberhalb von der Versiegelungseinrichtung angeordnet. Dies ermöglicht eine Überwachung eines Versiegelungszustands bereits während des Auftrags einer Versiegelungsflüssigkeit oder zeitlich und räumlich direkt an die Herstellung einer Versiegelung anschließend, und zwar ohne Beanspruchung einer zusätzlichen Aufstellfläche.

Vorzugsweise umfasst die pharmazeutische Produktionsanlage eine Trocknungsstrecke, entlang welcher die Kapseln während einer Trocknung der Versiegelungsflüssigkeit transportiert werden. Beispielsweise ist es möglich, dass entlang der Trocknungsstrecke mehrere Kapseln verteilt angeordnet sind, wobei der Trocknungsgrad der Kapseln entlang der Trocknungsstrecke gesehen und in Transportrichtung der Kapseln zunimmt.

Insbesondere ist eine Mehrzahl von räumlich zueinander versetzt angeordneten Messeinrichtungen vorgesehen, wobei die Messeinrichtungen jeweils eine Infrarotkamera oder eine Kamera mit Infrarotfilter aufweisen. Beispielsweise ist eine erste Messeinrichtung bezogen auf die Schwerkraftrichtung oberhalb einer Versiegelungseinrichtung angeordnet. Eine zweite Messeinrichtung ist beispielsweise in einem zu der Versiegelungseinrichtung benachbarten Bereich angeordnet. Wenn die pharmazeutische Produktionsanlage eine Trocknungsstrecke umfasst, kann eine erste Messeinrichtung vorgesehen sein, die räumlich der Versiegelungseinrichtung zugeordnet ist und den Auftrag einer Versiegelungsflüssigkeit überwacht, und eine zweite Messeinrichtung, die räumlich der Trocknungsstrecke zugeordnet ist und den Trocknungsvorgang überwacht. Auch der Einsatz dritter und weiterer Messeinrichtung ist möglich.

Die eingangs genannte Aufgabe wird auch durch ein Verfahren mit den Merkmalen des nebengeordneten Verfahrensanspruchs gelöst. Ausgestaltungen und Vorteile des erfindungsgemäßen Verfahrens wurden bereits vorstehend unter Bezugnahme auf die erfindungsgemäße Produktionsanlage erläutert.

Vorteilhafte Ausgestaltungen des erfindungsgemäßen Verfahrens sind Gegenstand der Unteransprüche 9 und 10.

Weitere Merkmale und Vorteile der Erfindung sind Gegenstand der nachfolgenden Beschreibung und der zeichnerischen Darstellung von Ausführungsbeispielen.

In der Zeichnung zeigt
- Fig. 1: eine Seitenansicht einer Ausführungsform einer pharmazeutischen Produktionsanlage mit zwei Messeinrichtungen; und
- Fig. 2: eine Draufsicht einer ersten Ausführungsform einer Kapsel;
- Fig. 3: eine Draufsicht einer weiteren Ausführungsform einer Kapsel;
- Fig. 4: eine bildliche Darstellung eines mittels einer ersten Messeinrichtung der Produktionsanlage gemäß Fig. 1 erfassten Temperaturzustands einer Mehrzahl von Kapseln und deren Versiegelungen; und
- Fig. 5: eine der Fig. 4 entsprechende Darstellung eines mittels einer zweiten Messeinrichtung der Produktionsanlage gemäß Fig. 1 erfassten Temperaturzustands der Mehrzahl von Kapseln und deren Versiegelungen.

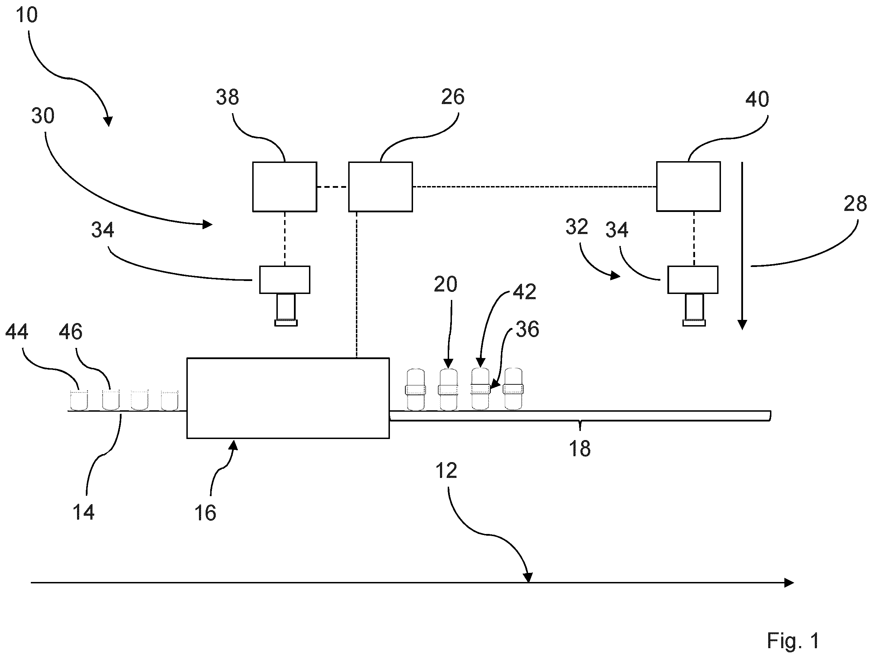

In Fig. 1 ist schematisch eine Ausführungsform einer pharmazeutischen Produktionsanlage dargestellt, die insgesamt mit dem Bezugszeichen 10 bezeichnet ist. Der pharmazeutischen Produktionsanlage 10 ist eine Produktionsrichtung 12 zugeordnet, entlang welcher eine Verarbeitung und Bearbeitung von Kapselteilen bzw. Kapseln erfolgt. Die pharmazeutische Produktionsanlage 10 umfasst entlang der Produktionsrichtung 12 gesehen ein Transportband 14, eine Versiegelungseinrichtung 16 und eine Trocknungsstrecke 18.

Das Transportband 14 dient zur Anordnung und zum Transport von Hüllenteilen 44 und 46 entlang der Produktionsrichtung 12 in die Versiegelungseinrichtung 16 hinein.

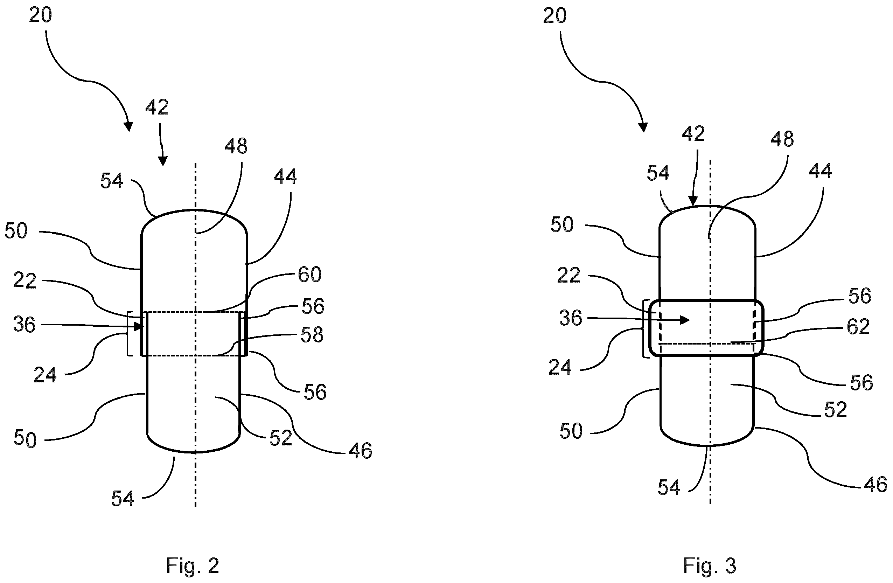

In der Versiegelungseinrichtung 16 werden die Hüllenteile 44 und 46 zur Herstellung von Kapseln 20 mittels einer Versiegelungsflüssigkeit 22 in einem Versiegelungsbereich 24 dichtend versiegelt (vergleiche Fig. 2 und 3).

Die Versiegelungseinrichtung 16 kommuniziert mit einer Steuerungseinheit 26, welche Verfahrensparameter zur Dauer und/oder Menge und/oder Position des Auftrags der Versiegelungsflüssigkeit 22 auf eine Kapsel 20 vorgibt. Beispielsweise kann die Versiegelungseinrichtung 16 mit der Steuerungseinheit 26 elektrisch verbunden sein, oder diese kommunizieren drahtlos miteinander.

Nach Auftrag der Versiegelungsflüssigkeit 22 gelangen die versiegelten Kapseln 20 zu der Trocknungsstrecke 18, entlang welcher die Kapseln 20 der Produktionsrichtung 12 folgend transportiert werden und entlang welcher die jeweils auf eine Kapsel 20 aufgetragene Versiegelungsflüssigkeit 22 trocknet.

Die Produktionsanlage 10 weist beispielsweise zwei Messeinrichtungen 30 und 32 auf. Eine erste Messeinrichtung 30 ist vorzugsweise bezogen auf eine Schwerkraftrichtung 28 oberhalb der Versiegelungseinrichtung 16 angeordnet. Eine zweite Messeinrichtung 32 ist beispielsweise bezogen auf die Schwerkraftrichtung 28 oberhalb der Trocknungsstrecke 18 angeordnet, insbesondere im Bereich eines Endes der Trocknungsstrecke 18.

Die Messeinrichtungen 30, 32 umfassen jeweils eine Infrarotkamera 34. Die Messeinrichtungen 30, 32 erfassen mittels der Infrarotkamera 34 Temperaturen und/oder Temperaturänderungen der Kapseln 20, insbesondere von Temperaturen der Versiegelungsbereiche 24 der Kapseln 20.

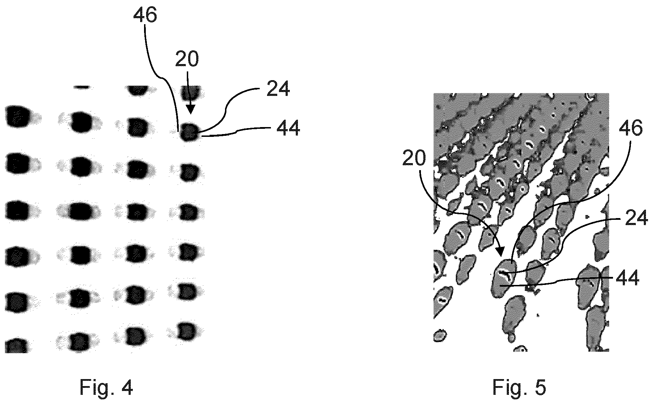

Die erste (der Versiegelungseinrichtung 16 zugeordnete) Messeinrichtung 30 erfasst Temperaturzustände der jeweiligen Versiegelungsbereiche 24 jeweiliger Kapseln 20 und/oder von zu einem jeweiligen Versiegelungsbereich 24 benachbarten Kapselabschnitten, insbesondere der einander abgewandten Enden der Hüllenteile 44 und 46. Fig. 4 zeigt beispielhaft eine bildliche Darstellung von Temperaturzuständen, welche durch die erste Messeinrichtung 30 erfasst werden. Unmittelbar an einen Auftrag der Versiegelungsflüssigkeit 22 anschließend weist der Versiegelungsbereich 24 einer Kapsel 20 im Vergleich zu seitlich angrenzenden Kapselabschnitten der Hüllenteile 44 und 46 dieser Kapsel 20 eine deutlich höhere Temperatur auf, was in Fig. 4 mit einem deutlichen Kontrast zwischen den genannten Bereichen der Kapseln 20 korrespondiert.

Die zweite (einem Ende der Trocknungsstrecke 18 zugeordnete) Messeinrichtung 32 erfasst ebenfalls Temperaturzustände der jeweiligen Versiegelungsbereiche 24 jeweiliger Kapseln 20 und/oder von zu einem jeweiligen Versiegelungsbereich 24 benachbarten Kapselabschnitten, insbesondere der einander abgewandten Enden der Hüllenteile 44 und 46. Fig. 5 zeigt beispielhaft eine bildliche Darstellung von Temperaturzuständen, welche durch die zweite Messeinrichtung 32 erfasst werden. Nach zumindest weitestgehend abgeschlossener Trocknung (unter Verdunstung eines Lösungsmittels) der Versiegelungsflüssigkeit 22 einer Kapsel 20 weist der Versiegelungsbereich 24 eine Temperatur auf, die sich weitestgehend an die Temperatur der seitlich angrenzenden Kapselabschnitten der Hüllenteile 44 und 46 dieser Kapsel 20 angeglichen hat, was in Fig. 5 mit einem nur noch schwachen Kontrast zwischen den genannten Bereichen der Kapseln 20 korrespondiert.

Die erste Messeinrichtung 30 und die zweite Messeinrichtung 32 kommunizieren jeweils mit einer jeweils zugeordneten Auswerteeinheit 38, 40. Alternativ hierzu umfasst die pharmazeutische Produktionsanlage 10 nur eine gemeinsame Auswerteeinheit 38 oder 40, welche sowohl mit der ersten Messeinrichtung 30 als auch mit der zweiten Messeinrichtung 32 kommuniziert.

Die mindestens eine Auswerteeinheit 38, 40 ist ausgebildet zur automatischen Auswertung der von den Messeinrichtung 30, 32 erfassten Temperaturen und/oder Temperaturänderungen.

Die erste Messeinrichtung 30 erfasst Temperaturen und/oder Temperaturänderungen und durch räumliche Zuordnung der Temperaturen auch die Positionierung, Erstreckung und/oder Vollständigkeit einer Versiegelung eines frisch hergestellten Versiegelungsbereichs 24 einer Kapsel 20.

Die zweite Messeinrichtung 32 erfasst Temperaturen und/oder Temperaturänderungen und durch räumliche Zuordnung der Temperaturen auch die Positionierung, Erstreckung und/oder Vollständigkeit einer Versiegelung eines zumindest teilweise getrockneten Versiegelungsbereichs 24 einer Kapsel 20.

Bei einer alternativen, in der Zeichnung nicht dargestellten Ausführungsform ist keine Trocknungsstrecke 18 vorgesehen. In diesem Fall verbleiben Kapseln 20 - nach Auftrag einer Versiegelungsflüssigkeit 22 - für die Dauer einer Trocknung in der Versiegelungseinrichtung 16. Eine der Versiegelungseinrichtung 16 zugeordnete Messeinrichtung 30, erfasst in diesem Fall vorzugsweise sowohl Temperaturzustände frisch hergestellter Versiegelungsbereiche 24 als auch teilgetrockneter oder vollständig getrockneter Versiegelungsbereiche 24.

Die Auswerteeinheiten 38, 40 kommunizieren mit der Steuerungseinheit 26. Beispielsweise können die erste und zweite Auswerteeinheit 38, 40 mit der Steuerungseinheit 26 elektrisch verbunden sein oder kontaktlos miteinander kommunizieren. Stellt eine oder beide Auswerteeinheit 38, 40 eine Abweichung der Ist-Werte zu vorgegebenen Soll-Werten der Position und/oder Vollständigkeit und/oder Trocknung der Versiegelungsbereiche 24 fest, werden die Verfahrensparameter für den Betrieb der Versiegelungseinrichtung 16 - bspw. eine Dauer und/oder eine Menge und/oder eine Position eines Auftrags der Versiegelungsflüssigkeit 22 - mittels der Steuerungseinheit 26 automatisch angepasst.

Die Produktionsanlage 10 eignet sich zur Verwendung für Kapseln 20, welche unterschiedliche Versiegelungsarten aufweisen. Dies wird nachfolgend unter Bezugnahme auf die Figuren 3 und 4 erläutert.

Eine Kapsel 20 weist eine Kapselhülle 42 auf. Die Kapselhülle 42 ist aus einem ersten Hüllenteil 44 und einem zweiten Hüllenteil 46 gebildet. Jedes Hüllenteil 44 und 46 weist eine sich eine um eine gemeinsame Erstreckungsachse 48 rotationssymmetrisch erstreckende Wandung 50 auf, die einen Aufnahmeraum 52 begrenzt, der zur Aufnahme pharmazeutischer Wirkstoffe dient. Ein freies Ende 54 jedes Hüllenteils 44, 46 ist verschlossen, und ein zweites Ende 56 weist eine dem innenliegenden Aufnahmeraum 52 jeweils zugewandte Öffnung 58, 60 zu auf. Der Durchmesser der Öffnung 58 eines ersten Hüllenteils 44 ist größer als ein Durchmesser der Öffnung 60 des zweiten Hüllenteils 46, derart, dass das zweite Hüllenteil 46 mit seiner Öffnung 60 in die Öffnung 58 des ersten Hüllenteils 44 zwecks Bildung der Kapselhülle 42 eingesteckt werden kann.

Fig. 2 zeigt eine Ausführungsform einer Kapsel 20 mit einer verdeckten Versiegelung 36. Vor dem Zusammenstecken des ersten Hüllenteils 44 und des zweiten Hüllenteils 46 erfolgt ein Auftrag von Versiegelungsflüssigkeit 22 in einem Bereich, der nach radial außen von dem zweiten Ende 56 des ersten Hüllenteils 44 und nach radial innen von dem zweiten Ende 56 des zweiten Hüllenteils 46 begrenzt ist.

Fig. 3 zeigt ein Ausführungsform einer Kapsel 20 mit einer nach außen exponierten Versiegelung 36. Das erste und das zweite Hüllenteil 44, 46 sind - wie bei der Ausführungsform gemäß Fig. 2 - zusammengesteckt. Ein Versiegelungsbereich 24 ist bezogen auf die Wandungen 50 radial außen angeordnet und zur Umgebung der Kapsel 20 hin exponiert. Ein solcher Versiegelungsbereich 24 wird auch als Banderolierung bezeichnet.

## Patentansprüche

1. Pharmazeutische Produktionsanlage (10) mit einer Messeinrichtung (30, 32) zum Überwachen einer Versiegelung von Kapseln (20), wobei die Kapseln (20) eine Kapselhülle (42) aufweisen, welche von einem ersten Hüllenteil (44) und einem zweiten Hüllenteil (46) gebildet ist, wobei die Hüllenteile (44, 46) in einem Versiegelungsbereich (24) mit einer dichtenden Versiegelungsflüssigkeit (22) versehen sind, **dadurch gekennzeichnet, dass** die Messeinrichtung (10) eine Infrarotkamera (34) oder eine Kamera mit Infrarotfilter umfasst, wobei die Messeinrichtung (30, 32) eine Temperatur oder eine Temperaturänderung des Versiegelungsbereichs (24) und/oder von zu dem Versiegelungsbereich (24) benachbarten Kapselabschnitten erfasst.

2. Pharmazeutische Produktionsanlage (10) nach dem vorstehenden Anspruch, **dadurch gekennzeichnet, dass** die pharmazeutische Produktionsanlage (10) eine Auswerteeinheit (38, 40) umfasst, wobei die Auswerteeinheit (38, 40) ausgebildet ist zur automatischen Auswertung der von der Messeinrichtung (30, 32) erfassten Temperaturen und/oder Temperaturänderungen.

3. Pharmazeutische Produktionsanlage (10) nach einem der vorstehenden Ansprüche, **dadurch gekennzeichnet, dass** die pharmazeutische Produktionsanlage (10) eine Versiegelungseinrichtung (16) zur Versiegelung der Kapseln (20) und eine Steuerungseinheit (26) umfasst, welche Verfahrensparameter zur Dauer und/oder Menge und/oder Position des Auftrags der Versiegelungsflüssigkeit (22) auf eine Kapsel (20) vorgibt.

4. Pharmazeutische Produktionsanlage (10) nach Anspruch 3 bei Rückbezug auf Anspruch 2, **dadurch gekennzeichnet, dass** die Steuerungseinheit (26) mit der Auswerteeinheit (38, 40) kommuniziert.

5. Pharmazeutische Produktionsanlage (10) nach Anspruch 3 oder 4, **dadurch gekennzeichnet, dass** die Messeinrichtung (30) bezogen auf die Schwerkraftrichtung (28) oberhalb von der Versiegelungseinrichtung (16) angeordnet ist.

6. Pharmazeutische Produktionsanlage (10) nach einem der vorstehenden Ansprüche, **dadurch gekennzeichnet, dass** die pharmazeutische Produktionsanlage (10) eine Trocknungsstrecke (18) umfasst, entlang welcher die Kapseln (20) während einer Trocknung der Versiegelungsflüssigkeit (22) transportiert werden.

7. Pharmazeutische Produktionsanlage (10) nach einem der vorstehenden Ansprüche, **dadurch gekennzeichnet, dass** eine Mehrzahl von räumlich zueinander versetzt angeordneten Messeinrichtungen (30, 32) vorgesehen ist, wobei die Messeinrichtungen (30, 32) jeweils eine Infrarotkamera (34) oder eine Kamera mit Infrarotfilter aufweisen.

8. Verfahren zum Überwachen einer Versiegelung von Kapseln (20), wobei die Kapseln (20) eine Kapselhülle (42) aufweisen, welche von einem ersten Hüllenteil (44) und einem zweiten Hüllenteil (46) gebildet ist, wobei die Hüllenteile (44, 46) in einem Versiegelungsbereich (24) mit einer dichtenden Versiegelungsflüssigkeit (22) versehen werden oder versehen sind, insbesondere unter Verwendung einer pharmazeutische Produktionsanlage (10) nach einem der vorstehenden Ansprüche, umfassend:
a) Erfassen einer Temperatur oder einer Temperaturänderung des Versiegelungsbereichs (24) und/oder von zu dem Versiegelungsbereich (24) benachbarten Kapselabschnitten, und
b) Auswerten der Temperatur oder der Temperaturänderung.

9. Verfahren nach Anspruch 8, **dadurch gekennzeichnet, dass** eine Erfassung gemäß a) während des Auftrags von Versiegelungsflüssigkeit (22) in dem Versiegelungsbereich (24) und/oder nach dem Auftrag von Versiegelungsflüssigkeit (22) in dem Versiegelungsbereich (24) erfolgt.

10. Verfahren nach Anspruch 8 oder 9, **dadurch gekennzeichnet, dass** Verfahrensparameter zur Dauer und/oder Menge und/oder Position des Auftrags der Versiegelungsflüssigkeit (22) auf eine Kapsel (20) angepasst werden in Abhängigkeit der gemäß a) erfassten Temperatur oder Temperaturänderung.

## Claims

1. Pharmaceutical production facility (10) comprising a measuring device (30, 32) for monitoring sealing of capsules (20), the capsules (20) having a capsule shell (42) which is formed by a first shell part (44) and a second shell part (46), the shell parts (44, 46) being provided with a sealing liquid (22) in a sealing region (24), **characterized in that** the measuring device (10) comprises an infrared camera (34) or a camera having an infrared filter, the measuring device (30, 32) detecting a temperature or a temperature change of the sealing region (24) and/or of capsule portions adjacent to the sealing region (24).

2. Pharmaceutical production facility (10) according to the preceding claim, **characterized in that** the pharmaceutical production facility (10) comprises an evaluation unit (38, 40), the evaluation unit (38, 40) being designed to automatically evaluate the temperatures and/or temperature changes detected by the measuring device (30, 32).

3. Pharmaceutical production facility (10) according to either of the preceding claims, **characterized in that** the pharmaceutical production facility (10) comprises a sealing device (16) for sealing the capsules (20) and a control unit (26) which specifies method parameters for the duration and/or quantity and/or position of the application of the sealing liquid (22) to a capsule (20).

4. Pharmaceutical production facility (10) according to claim 3 with reference to claim 2, **characterized in that** the control unit (26) communicates with the evaluation unit (38, 40).

5. Pharmaceutical production facility (10) according to either claim 3 or claim 4, **characterized in that** the measuring device (30) is arranged above the sealing device (16) with respect to the direction of gravity (28).

6. Pharmaceutical production facility (10) according to any of the preceding claims, **characterized in that** the pharmaceutical production facility (10) comprises a drying line (18) along which the capsules (20) are transported during drying of the sealing liquid (22).

7. Pharmaceutical production facility (10) according to any of the preceding claims, **characterized in that** a plurality of measuring devices (30, 32) arranged spatially offset from one another is provided, the measuring devices (30, 32) each having an infrared camera (34) or a camera having an infrared filter.

8. Method for monitoring a seal of capsules (20), wherein the capsules (20) have a capsule shell (42) which is formed by a first shell part (44) and a second shell part (46), wherein the shell parts (44, 46) will be provided or are provided with a seal-tight sealing liquid (22) in a sealing region (24), in particular using a pharmaceutical production facility (10) according to any of the preceding claims, comprising:
a) detecting a temperature or a temperature change of the sealing region (24) and/or of capsule portions adjacent to the sealing region (24), and
b) evaluating the temperature or temperature change.

9. Method according to claim 8, **characterized in that** a detection according to a) takes place during the application of sealing liquid (22) in the sealing region (24) and/or after the application of sealing liquid (22) in the sealing region (24).

10. Method according to either claim 8 or claim 9, **characterized in that** method parameters for the duration and/or quantity and/or position of the application of the sealing liquid (22) to a capsule (20) are adapted depending on the temperature or temperature change detected according to a).

## Revendications

1. Installation de production pharmaceutique (10) comportant un dispositif de mesure (30, 32) pour la surveillance d'un scellage de capsules (20), dans laquelle les capsules (20) présentent une enveloppe de capsule (42) qui est formée par une première partie d'enveloppe (44) et une seconde partie d'enveloppe (46), dans laquelle les parties d'enveloppe (44, 46) sont pourvues d'un liquide de scellage (22) d'étanchéité dans une zone de scellage (24), **caractérisée en ce que** le dispositif de mesure (10) comprend une caméra infrarouge (34) ou une caméra avec filtre infrarouge, dans laquelle le dispositif de mesure (30, 32) détecte une température ou une variation de température de la zone de scellage (24) et/ou de sections de capsule voisines de la zone de scellage (24).

2. Installation de production pharmaceutique (10) selon la revendication précédente, **caractérisée en ce que** l'installation de production pharmaceutique (10) comprend une unité d'évaluation (38, 40), dans laquelle l'unité d'évaluation (38, 40) est conçue pour l'évaluation automatique des températures et/ou des variations de température détectées par le dispositif de mesure (30, 32).

3. Installation de production pharmaceutique (10) selon l'une des revendications précédentes, **caractérisée en ce que** l'installation de production pharmaceutique (10) comprend un dispositif de scellage (16) pour le scellage des capsules (20) et une unité de commande (26) qui prédéfinit des paramètres de procédé pour la durée et/ou la quantité et/ou la position de l'application du liquide de scellage (22) sur une capsule (20).

4. Installation de production pharmaceutique (10) selon la revendication 3 en référence à la revendication 2, **caractérisée en ce que** l'unité de commande (26) communique avec l'unité d'évaluation (38, 40).

5. Installation de production pharmaceutique (10) selon la revendication 3 ou 4, **caractérisée en ce que** le dispositif de mesure (30) est disposé au-dessus du dispositif de scellage (16) par rapport à la direction de la force de gravité (28).

6. Installation de production pharmaceutique (10) selon l'une des revendications précédentes, **caractérisée en ce que** l'installation de production pharmaceutique (10) comprend un tronçon de séchage (18) le long duquel les capsules (20) sont transportées pendant un séchage du liquide de scellage (22).

7. Installation de production pharmaceutique (10) selon l'une des revendications précédentes, **caractérisée en ce qu'**il est prévu une pluralité de dispositifs de mesure (30, 32) disposés de manière décalée dans l'espace les uns par rapport aux autres, dans lequel les dispositifs de mesure (30, 32) présentent respectivement une caméra infrarouge (34) ou une caméra avec filtre infrarouge.

8. Procédé permettant la surveillance d'un scellage de capsules (20), dans lequel les capsules (20) présentent une enveloppe de capsule (42) qui est formée par une première partie d'enveloppe (44) et une seconde partie d'enveloppe (46), dans lequel les parties d'enveloppe (44, 46) sont pourvues ou sont destinées à être pourvues d'un liquide de scellage (22) d'étanchéité dans une zone de scellage (24), en particulier à l'aide d'une installation de production pharmaceutique (10) selon l'une des revendications précédentes, comprenant :
a) la détection d'une température ou d'une variation de température de la zone de scellage (24) et/ou de sections de capsule voisines de la zone de scellage (24), et
b) l'évaluation de la température ou de la variation de température.

9. Procédé selon la revendication 8, **caractérisé en ce qu'**une détection selon a) est effectuée pendant l'application de liquide de scellage (22) dans la zone de scellage (24) et/ou après l'application de liquide de scellage (22) dans la zone de scellage (24).

10. Procédé selon la revendication 8 ou 9, **caractérisé en ce que** des paramètres de procédé pour la durée et/ou la quantité et/ou la position de l'application du liquide de scellage (22) sur une capsule (20) sont adaptés en fonction de la température ou de la variation de température détectée selon a).
